# EUROPEAN PATENT SPECIFICATION

(11) **EP 4 159 633 B1**
(45) Date of publication and mention of the grant of the patent: **06.03.2024**
(21) Application number: 22196513.0
(22) Date of filing: 20.09.2022
(51) Int. Cl.: B65D 5/74, B65D 47/10, B29C 45/00, B29C 37/00, B29C 45/14, B65D 51/22, B29L 31/56

(54) **OPENING DEVICE FOR A PACKAGE AND PACKAGE HAVING AN OPENING DEVICE**
ÖFFNUNGSVORRICHTUNG FÜR EINE VERPACKUNG UND VERPACKUNG MIT EINER ÖFFNUNGSVORRICHTUNG
DISPOSITIF D'OUVERTURE POUR UN EMBALLAGE ET EMBALLAGE DOTÉ D'UN DISPOSITIF D'OUVERTURE

(30) Priority: 30.09.2021 EP 21200035
(43) Date of publication of application: 05.04.2023
(73) Proprietor: Tetra Laval Holdings & Finance S.A., 1009 Pully (CH)
(72) Inventor: ZANON, Paolo, 41122 Modena (IT); MARTINI, Pietro, 43122 Parma (IT); VIETRI, Anna Rosa, 41122 Modena (IT)
(74) Representative: Tetra Pak - Patent Attorneys SE

(56) References cited:
- EP-A1- 2 368 807
- EP-A1- 3 153 413
- JP-A- 2018 172 136
- SE-C2- 526 048
- US-A- 5 176 300
- US-A1- 2002 033 395

## Description

### TECHNICAL FIELD

The present invention relates to a package, in particular a package having a main body, filled with a pourable product, even more particular filled with a pourable food product, and comprising an opening device.

### BACKGROUND ART

As is known, many liquid or pourable food products, such as fruit juice, milk, milk-based drinks, drinking yoghurt, wine, tomato sauce, salt, sugar etc., are sold in packages, in particular sealed packages, made of a sterilized packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. layers of polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Thus, such a type of package comprises a main body formed from a multilayer packaging material and has a designated pour opening, which allows the outpouring of the pourable product from the package. Additionally, the package can comprise an opening device arranged about the designated pour opening. The opening device is designed to seal the package prior to a first opening of the opening device and to allow for a controlled outpouring.

A typical opening device comprises a base frame coupling the opening device onto the packaging material forming the package and about the designated pour opening, a collar extending from the base frame and delimiting a flow channel and a closing element arranged within the flow channel and configured to close the designated pour opening.

When the package is delivered to the final customer, the closing element is rupturably connected to an inner wall of the collar so as to close and seal the designated pour opening. Afterwards it is possible to re-arrange the closing element into the flow channel so as to newly close the designated pour opening and to avoid an unwanted spillage of the pourable product.

It is known that during molding of the base frame onto the packaging material and about the designated pour opening, it must be guaranteed that the base frame covers the edge of the packaging material delimiting the pour opening so as to guarantee that the edge does not get into contact with the pourable product.

Even though the known opening devices work satisfyingly well, a need is felt in the sector to further improve the known opening devices.

EP2368807A1 discloses an assembly that has a peripheral lateral wall with an upper end that is connected to an upper end of an external skirt by a portion of an upper peripheral plate. A lower end of the wall is prolonged to form a portion of a flat circular lower plate. Dimension of the portion of the lower plate enables the portion to cooperate and position with an internal peripheral edge of an opening of a flange ring of a base, so that the portion and the peripheral edge are acted jointly in a sealed manner when a stopper is completely screwed in closing. The stopper and the base are made of molding of plastic material.

JP2018172136A discloses a plug that includes: a spout having a cylindrical-shaped cylindrical wall, a flange part which is provided at a lower end of the cylindrical wall and whose outer diameter is larger than the cylindrical wall, and a closing plate which is connected to the flange part on the inside of a lower end of the cylindrical wall, in which a circumferential half cut is provided, to which a pull ring is continuously provided and which can be unsealed by breaking; and a cap screwed to or fitted in the cylindrical wall. The half cut is provided on an upper surface side of the closing plate, and on the surface which becomes a lower surface side of the closing plate of the flange part, a thick wall part which has a step-like shape toward an outer peripheral direction of the flange part from a position facing the half cut is provided across the whole periphery.

EP3153413A1 discloses a method of applying a lid onto a neck of a container, the lid having a side wall extending around an axis and an end wall extending transversely to said axis, comprises the following steps: positioning the lid onto the neck, exerting on the end wall a force directed towards the container, so as to level the lid on the neck, and screwing the lid onto the neck by rotating the lid in a screwing direction.

### DISCLOSURE OF INVENTION

It is therefore an object of the present invention to provide in a straightforward and low-cost manner an improved package, in particular a package having a main body formed from a multilayer packaging material, filled with a pourable product, in particular filled with a pourable food product, having an improved opening device.

According to the present invention, there is provided a package according to the independent claim.

Further advantageous embodiments of the package are specified in the claims directly or indirectly depending on claim 1.

### BRIEF DESCRIPTION OF THE DRAWINGS

Two non-limiting embodiments of the present invention will be described by way of example with reference to the accompanying drawings, in which:
Figure 1 is a schematic perspective view of a portion of a package having an opening device according to a first embodiment of the present invention, with parts removed for clarity;
Figure 2 is a section view of the opening device of Figure 1, with parts removed for clarity;
Figure 3 is an enlarged detail of Figure 2, with parts removed for clarity; and
Figure 4 is a section view of an opening device according to a second embodiment of the present invention, with parts removed for clarity.

### BEST MODES FOR CARRYING OUT THE INVENTION

Number 1 indicates as a whole a package (only partially shown to the extent necessary for the comprehension of the present invention) comprising:
- a main body 2, in particular a main body 2 formed from a multilayer packaging material 3, being filled and/or being fillable with a pourable product, in particular a pourable food product, and in particular having a designated pour opening (not shown and known as such) configured to allow for an outflow of the pourable product from main body 2; and
- an opening device 4, in particular formed from a polymer material, coupled to main body 2 about the designated pour opening and configured to seal the designated pour opening and to be controllable so as to open the designated pour opening and to allow for the outpouring of the pourable product.

The pourable product may be milk, tomato sauce, milk-based drinks, drinking yoghurt, water, sugar, salt, juices, emulsions, and the like.

According to some preferred non-limiting embodiments, packaging material 3 comprises at least a layer of fibrous material, such as e.g. a paper or cardboard layer, and at least two layers of heat-seal plastic material, e.g. polyethylene layers, interposing the layer of fibrous material in between one another. One of these two layers of heat-seal plastic material may define the inner face of main body 2 contacting the pourable product.

Preferably, packaging material 3 may also comprise a layer of gas- and light-barrier material, e.g. aluminum foil or ethylene vinyl alcohol (EVOH) film, in particular being arranged between one of the layers of heat-seal plastic material and the layer of fibrous material. Preferentially but not necessarily, packaging material 3 may also comprise a further layer of heat-seal plastic material being interposed between the layer of gas- and light-barrier material and the layer of fibrous material.

Preferentially, each package 1, in particular the respective main body 2, may be obtained from a respective blank of multilayer packaging material 3. In particular, the blank may define a precursor of the respective package 1, in particular the respective main body 2.

In more detail, the respective blank may comprise the respective designated pour opening, which in particular may be covered by a separation membrane. The separation membrane may be formed from a gas-barrier material. In particular, the separation membrane may be defined by a portion of the layer of the gas- and light-barrier material.

According to some preferred non-limiting embodiments, multilayer packaging material 3 may be provided in the form of a web, thereby the blanks may be successively arranged with respect to one another. During the formation of packages 1, the web is formed into a tube, longitudinally sealed, filled with the pourable product and transversally sealed and cut in correspondence with the extensions of the blanks.

According to the embodiment, each opening device 4 is molded, to the respective main body 2 about the designated pour opening, in particular molded to the packaging material 3 from which main body 2 is formed or onto the respective blank. Preferentially, each opening device 4 may be molded onto the respective blank and about the designated pour opening. In particular and as will be explained further below, a first portion of opening device 4 may be molded onto the respective blank and a second portion may be applied onto the first portion after molding of the first portion.

In particular, opening device 4 may be molded by means of a respective mold.

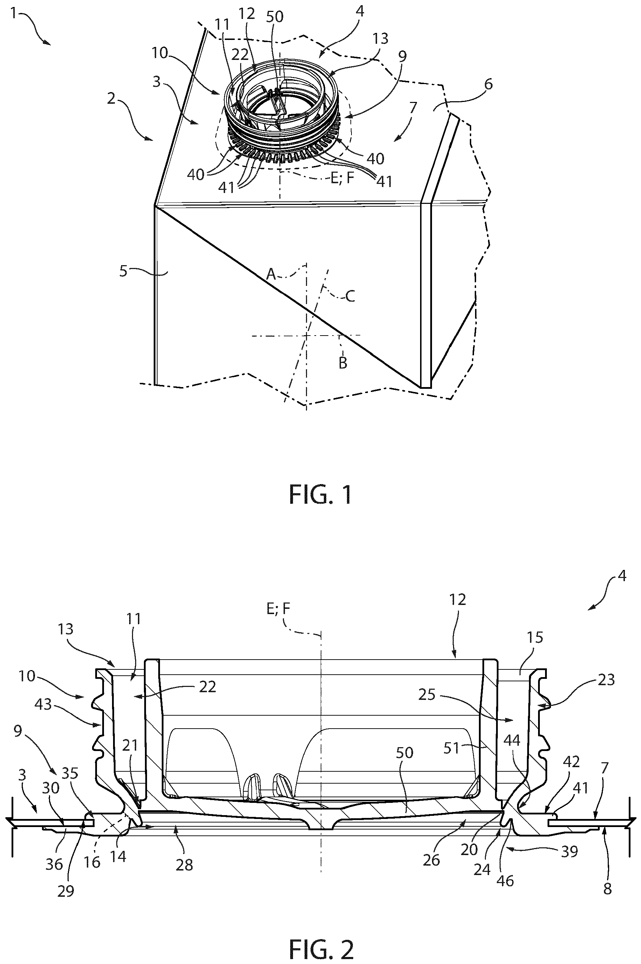

With particular reference to Figure 1, main body 2 may extend along a longitudinal axis A, a first transversal axis B perpendicular to longitudinal axis A and a second transversal axis C perpendicular to first transversal axis B and longitudinal axis A. In particular, the extension of package 2 along longitudinal axis A may be larger than the extension of package 2 along first transversal axis B and second transversal axis C.

Preferentially, main body 2 may be parallelepiped-shaped.

According to some preferred non-limiting embodiments, main body 2 may comprise a first wall (not shown and known as such), in particular being transversal, even more particular perpendicular, to longitudinal axis A, from which main body 2 may extend along longitudinal axis A. Preferably, the first wall may define a support surface of package 1, in particular main body 2, which may be designed to be put in contact with a support, such as e.g. a shelf, when, in use, being e.g. exposed within a sales point or when being stored. In particular, when being arranged on the support the first wall may define a bottom wall.

Preferably, main body 2 may also comprise a side wall 5 being (fixedly) connected to the first wall and extending, in particular substantially parallel, along longitudinal axis A, from the first wall.

Preferentially, main body 2 may also comprise a second wall 6 opposite to the first wall and being (fixedly) connected to side wall 5. In particular, side wall 5 may be interposed between the first wall and second wall 6.

In particular, when package 1 is arranged on a support, second wall 6 may define a top wall.

According to the shown non-limiting embodiment, the first wall and second wall 6 may be parallel to one another.

According to non-limiting alternative embodiments not shown, the first wall and second wall 6 may be inclined with respect to one another. In particular, second wall 6 may define a slanted top or may define a portion of a gable-top.

According to some non-limiting embodiments, second wall 6 may carry and/or comprise the designated pour opening.

According to some preferred non-limiting embodiments, package 1, in particular main body 2, may comprise an inner space configured to contain and/or containing the pourable product. In particular, the first wall, side wall 5 and second wall 6 may delimit the inner space.

In further detail and with particular reference to Figures 1 and 2, packaging material 3 comprises a first face 7 and a second face 8 opposite to first face 7. In particular, second face 8 may be configured to contact the pourable product and/or to face the inner space of package 1, in particular main body 2. Moreover, first face 7 may face away from the inner space and/or may face an external space.

With particular reference to Figures 1 to 3, opening device 4 comprises:
- a base frame 9 configured to couple and/or coupling opening device 4 on packaging material 3 forming main body 2 and about the designated pour opening;
- a collar 10 integrally connected to and extending from base frame 9 and delimiting a flow channel 11; and
- a closing element 12 arranged and/or being arrangeable within flow channel 11 and configured to close and/or cover, and, in particular at least prior to a first movement of closing element 12 away from collar 10 and/or flow channel 11, to seal, the designated pour opening.

More specifically, flow channel 11 extends between a pouring outlet 13 (of collar 10) configured to allow for the outpouring of the pourable product and an inlet 14 (of collar 10) configured to allow for the introduction of the pourable product into flow channel 11, in particular from the inner space of package 1, in particular main body 2, into flow channel 11.

In further detail, collar 10 may extend along a central axis E and pouring outlet 13 and inlet 14 may be arranged at respective axial ends of collar 10.

In even more detail, collar 10 may comprise a first delimiting rim 15 delimiting pouring outlet 13 and a second delimiting rim delimiting inlet 14, each one being arranged at the respective axial end of collar 10.

Preferentially, closing element 12 may be coaxially positioned with respect to collar 10. In other words, a central axis F of closing element 12 may be coaxial to central axis E.

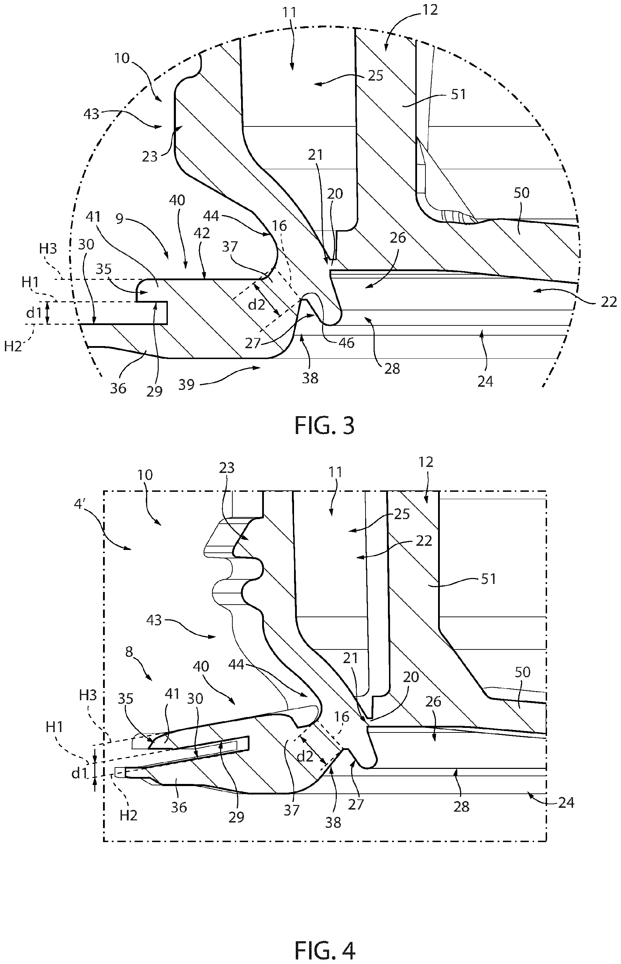

With particular reference to Figures 2 and 3, opening device 4 also comprises an annular interface 16 interposed between base frame 9 and collar 10 and/or connecting base frame 9 and collar 10 with one another.

The annular interface 16 is defined by a portion of opening device 4 being interposed between base frame 9 and collar 10. In particular, annular interface 16 is defined by a portion of opening device 4 which is interposed between base frame 9 and collar 10 and which comes along with a minimum thickness.

Preferentially, base frame 9, collar 10 and closing element 12 may be realized in a single piece.

Additionally, opening device 4 may also comprise a closure coupled and/or couplable to collar 10 and configured to selectively open and close pouring outlet 13, in particular for respectively allowing and impeding an outpouring of the pourable product.

Preferentially, closing element 12 and the closure may be connected, in particular fixed, to one another such that any movement of the closure results in a concurrent movement of closing element 12. In particular, closing element 12 and the closure may be connected to one another by means of fusing and/or welding and/or bonding and/or molding.

With particular reference to Figures 2 and 3, closing element 12 comprises a coupling membrane 20 being detachably and/or rupturably fixed to collar 10 along an (annular) initial contact portion 21 (of an inner wall 22 of collar 10).

Furthermore, closing element 12 is configured to (rupturably) detach from initial contact portion 21 so as to free and/or open the designated pour opening for allowing the outpouring of the pourable product.

Preferentially, prior to the first-time detachment of closing element 12 from initial contact portion 21, closing element 12 may be configured to seal the designated pour opening and the inner space. Afterwards, it is possible to place closing element 12 such that closing element 12 closes the designated pour opening, but may not seal the designated pour opening and the inner space anymore.

Moreover, when closing element 12 detaches, in use, for the first time from initial contact portion 21, coupling membrane 20 irreversibly ruptures from initial contact portion 21.

In more detail, closing element 12 may be controllable between an active position in which closing element 12 is configured to cover and/or close the designated pour opening and an inactive position in which closing element 12 frees and/or opens the designated pour opening.

In other words, closing element 12 may be configured to interrupt and/or at least obstacle a fluidic connection between pouring outlet 13 and inlet 14 when being in the active position and to allow for a fluidic connection between pouring outlet 13 and inlet 14 when being in the inactive position.

Preferentially, closing element 12 is arranged within flow channel 11 and/or may be interposed between pouring outlet 13 and base frame 9 when being in the active position.

Furthermore (see Figures 1 to 3), initially closing element 12 is controlled in the active position and prior to the first-time movement from the active position to the inactive position, closing element 12 is rupturably connected to initial contact portion 21 so as to also seal the designated pour opening.

Moreover, after the first-time movement of closing element 12 from the active position to the inactive position, closing element 12 can be newly placed in the active position. Then, closing element 12 can newly contact collar 10, in particular inner wall 22, so as to close and/or cover the designated pour opening and/or to interrupt and/or obstacle the fluidic connection between pouring outlet 13 and inlet 14.

Furthermore, in particular in order to ensure that closing element 12 can interact with collar 10, in particular inner wall 22, after the first-time movement of closing element 12 from the active position to the inactive position, collar 10 comprises :
- a main portion 23 comprising pouring outlet 13 and extending from initial contact portion 21 to pouring outlet 13; and
- a sealing ring 24 comprising inlet 14 and extending from initial contact portion 21 to inlet 14.

In particular, sealing ring 24 may be designed such to ensure that closing element 12 closes the designated pour opening and/or interrupts and/or at least obstacles the fluidic connection between inlet 14 and pouring outlet 13 when being in the active position and after the first-time movement of closing element 12 from the active position to the inactive position. In particular, even if the exact position of at least a portion of closing element 12 is below initial contact portion 21, it is ensured that closing element 12 contacts inner wall 22 of collar 10.

In more detail, main portion 23 may comprise a first surface portion 25 of inner wall 22 and sealing ring 24 may comprise a second surface portion of inner wall 22.

Preferentially, sealing ring 24 may comprise a (curved) tip portion delimiting inlet 14 and/or defining the second delimiting rim.

Moreover, inlet 14 may be arranged at an axial end of sealing ring 24 opposite to an axial end of sealing ring 24 that is arranged at initial contact portion 21.

In further detail, sealing ring 24 is connected to and may protrude from main portion 23 in such a manner so as to extend towards and/or into the inner space of package 1. In other words, sealing ring 24 may be designed to protrude towards and/or into the inner space.

Sealing ring 24 may delimit an auxiliary space, in particular having a frustoconical shape. More specifically, the auxiliary space may taper from (substantially) initial contact portion 21 to inlet 14.

Preferentially, sealing ring 24 may present rotational symmetry with respect to central axis E.

Advantageously, sealing ring 24 may comprise a first inner surface 26, in particular having an annular shape, facing flow channel 11 and an outer surface 27, in particular having an annular shape, opposite to first inner surface 26. In particular, first inner surface 26 may delimit the auxiliary space.

Moreover, first inner surface 26 may define the second surface portion of inner wall 22.

Outer surface 27 faces base frame 9.

In further detail, sealing ring 24 may also comprise a curved tip surface 28 connecting first inner surface 26 and outer surface 27 with one another.

With particular reference to Figures 2 and 3, base frame 9 comprises a first contact surface 29, in particular having an annular shape, configured to contact and/or contacting first face 7 and a second contact surface 30, in particular having an annular shape, configured to contact and/or contacting second face 8.

In particular, first contact surface 29 and second contact surface 30 face one another. Even more particular, first contact surface 29 and second contact surface 30 may define an interspace within which packaging material 3 is and/or is to be placed.

Preferentially, first contact surface 29 and second contact surface 30 may extend within respectively a first plane H1 and a second plane H2, in particular parallel to one another.

Moreover, first contact surface 29, in particular also first plane H1, and second contact surface 30, in particular second plane H2, are spaced apart from one another by a distance d1. In particular, distance d1 substantially corresponds to a thickness of packaging material 3.

Advantageously, initial contact portion 21 is interposed between first contact surface 29 and pouring outlet 13.

Advantageously, a thickness d2 of annular interface 16 is larger than distance d1. Preferentially, thickness d2 is at least 1,2 times, in particular at least 1,3 times, even more particular at least 1,4 times, larger than distance d1. In this way, it is ensured that during molding of opening device 4 onto packaging material 3 the flow of the molten polymer is such to cover the edge of packaging material 3 delimiting the designated pour opening. Even if packaging material 3 is not placed within the mold in a nominal position (i.e. the position defined during the design of the mold), the edge of packaging material 3 will be covered. Additionally, the flow of the molten polymer may be such to more easily reach second face 8 of packaging material 3.

In more detail, base frame 9 comprises a first annular frame 35 having first contact surface 29 and a second annular frame 36 having second contact surface 30. In particular, first annular frame 35 and second annular frame 36 may be integrally connected to one another.

Preferentially, first annular frame 35 and second annular frame 36 may be configured to be placed respectively outside of and inside of the inner space of main body 2.

In even more detail, base frame 9 may also comprise an annular coupling portion 37 integrally connected to first annular frame 36 and second annular frame 35. In particular, annular coupling portion 37 is arranged radially inside with respect to first annular frame 35 and second annular frame 36.

More specifically, first annular frame 35 and second annular frame 36 may radially protrude from annular coupling portion 37.

More in particular, annular interface 16 is interposed between annular coupling portion 37 and collar 10.

Advantageously, base frame 9, in particular annular coupling portion 37, comprises a second inner surface 38 facing flow channel 11 and/or outer surface 27.

In particular, sealing ring 24 may be placed within a space delimited by second inner surface 38.

Moreover, base frame 9 may comprise an inlet aperture 39 for the pourable product. Preferentially, inlet 14 may be axially displaced from inlet aperture 39. In particular, inlet 14 may be interposed between initial connecting portion 21 and inlet aperture 39.

With particular reference to Figures 1 to 3, first frame 35 may comprise a plurality of radially protruding ridge elements 40, in particular each ridge element 40 may comprise a free peripheral portion 41 (i.e free peripheral portions 41 are not interconnected with respect to one another).

Preferentially, ridge elements 40 may be angularly spaced apart from one another about central axis E and/or central axis F.

In particular, one or more ridge elements 40 may carry a respective portion of first contact surface 29, i.e. first contact surface 29 comprises a plurality of discrete portions or, in even other words, first contact surface 29 is not continuous.

According to the embodiment, first frame 35 comprises an external surface 42 opposite to first contact surface 29, and in particular extending within a third plane H3. In particular, third plane H3 may be parallel to first plane H1 and/or second plane H2.

Preferentially, external surface 42 may have a planar shape.

Moreover, collar 10 comprises an outer surface 43, opposite to inner wall 22, having a curved portion 44.

Curved portion 44 contacts and/or intersects with external surface 42.

Additionally, second inner surface 38 intersects outer surface 27 at a circumferential curve 46. In particular, inner surface 38 comprises circumferential curve 46.

In particular, circumferential curve 46 may result from the intersection of an intersection plane perpendicular to central axis E with second inner surface 38.

According to the embodiment, thickness d2 corresponds to the minimum distance between curved portion 44 and second inner surface 38.

Preferentially, thickness d2 may correspond to the minimum distance between curved portion 44 and circumferential curve 46.

Furthermore, annular interface 16 may extend between curved portion 44 and circumferential curve 46.

In further detail and with reference to Figures 2 and 3, a cross-section profile of sealing ring 24 with respect to a cross-section plane containing central axis E of collar 10 may comprise a first linear line and a second linear line radially displaced from the first linear line and being arranged radially outside with respect to the first linear line, in particular with respect to central axis E. In particular, the first linear line and the second linear line may result from the intersection of the cross-section plane with respectively first inner surface 26 and outer surface 27.

In more detail, the second linear line may present an extension corresponding to at least 50% of an extension of the first linear line. Preferentially, the extension of the first linear line is larger than the extension of the second linear line.

Moreover, the cross-section profile may also comprise a curved line connecting the first linear line and the second linear line with one another.

In further detail and with particular reference to Figures 2 and 3, closing element 12 may comprise:
- a central main wall 50 peripherally connected to coupling membrane 20; and
- a coupling structure 51 extending from central main wall 50 and configured to connect and/or connecting closing element 12 to the closure.

More specifically, coupling structure 51 may be connected, in particular welded and/or bonded and/or fused, to the closure, in particular an inner surface of the closure.

According to some preferred non-limiting embodiments, the closure may be moveable between:
- a closing configuration, in which the closure covers pouring outlet 13, in particular for impeding an outflow of the pourable product out of pouring outlet 13; and
- an opening configuration in which the closure may be detached from pouring outlet 13, in particular for allowing an outflow of the pourable product through pouring outlet 13.

Preferentially, the closure may be reversibly moved between the closing configuration and the opening configuration.

According to some preferred non-limiting embodiments, closing element 12 may be connected, in particular fused and/or welded and/or bonded, to the closure, in particular by means of coupling structure 51, such that movement of the closure between the closing configuration and the opening configuration may result in movement of closing element 12 between respectively the active position and the inactive position.

According to some non-limiting embodiments, base frame 9, collar 10 and closing element 12 may be integrally formed, in particular in a single piece. In particular, base frame 9, collar 10 and closing element 12 may be formed during a molding process, in particular during molding of opening device 4 onto the respective blank.

Furthermore, the closure may be coupled to collar 10 after formation of base frame 9, collar 10 and closing element 12.

In other words, base frame 9, collar 10 and closing element 12 may define the first portion of opening device 4 and the closure may define the second portion of opening device 4. Thus, the closure is applied to collar 10 after molding of base frame 9, collar 10 and closing element 12, in particular about the designated pour opening.

In use, a user receives package 1 with the closure and closing element 12 being respectively in the closing configuration and the active position so as to respectively cover pouring outlet 13 and the designated pour opening.

Prior to the first control of the closure from the closing configuration to the opening configuration and of closing element 12 from the active position to the inactive position, closing element 12, in particular through annular coupling membrane 20, is fixed to initial contact portion 21.

The user, in order to access the pourable product, needs to control the closure from the closing configuration to the opening configuration leading to a movement of closing element 12 from the active position to the inactive position and a rupturing of closing element 12, in particular of coupling membrane 20, from initial contact portion 21. This then allows the pourable product to flow from the inner space through flow channel 11 and out of flow channel 11 through pouring outlet 13.

Each time closing element 12 is arranged again in the active position (by moving the closure in the closing configuration) closing element 12 covers the designated pour opening. Thereby, the presence of sealing ring 24 ensures that closing element 12 engages inner wall 22 so as to close the designated pour opening and/or to interrupt or to obstacle a fluid connection between inlet 14 and pouring outlet 13.

With reference to Figure 4, number 4' indicates an alternative embodiment of an opening device according to the present invention. As opening device 4' is similar to opening device 4, the following description is limited to the differences between them, and using the same references, where possible, for identical or corresponding parts.

In particular, opening device 4' differs from opening device 4 in that external surface 42 is inclined with respect to first contact surface 35 and/or third plane H3 is inclined with respect to first plane H1 (i.e. third plane H3 and first plane H1 are not parallel to one another).

As operation of opening device 4' is similar to operation of opening device 4, we refer to the above-provided description.

The advantages of opening device 4 and opening device 4' and/or of package 1 according to the present invention will be clear from the foregoing description.

In particular, by having thickness d2 being larger than distance d1, one guarantees a flow of the molten polymer such that second face 8 and the edge of packaging material 3 delimiting the designated pour opening are covered by the plastic. This is also ensured in case packaging material 3 is not perfectly placed within the mold.

## Claims

1. Package (1) filled and/or fillable with a pourable product comprising a main body (2) having a designated pour opening and being formed from a multilayer composite packaging material (3), and an opening device (4, 4');
wherein the opening device (4, 4') is coupled onto the packaging material (3) of the main body (2) and about the designated pour opening;
wherein the opening device (4, 4') is molded to the main body (2);
wherein the opening device (4, 4') comprises:
- a base frame (9) configured to couple the opening device (4, 4') on the packaging material (3) and about the designated pour opening;
- a collar (10) integrally connected to and extending from the base frame (9), delimiting a flow channel (11) for the pourable product, and having an inlet (14) and a pouring outlet (13); and
- a closing element (12) arranged and/or being arrangeable within the flow channel (11) and being configured to cover and/or close the designated pour opening;
wherein the closing element (12) comprises a coupling membrane (20) that is detachably fixed to an initial contact portion (21) of an inner wall (22) of the collar (10);
wherein the collar (10) comprises a main portion (23) comprising the pouring outlet (13) and extending from the initial contact portion (21) to the pouring outlet (13);
wherein the base frame (9) comprises a first contact surface (29) configured to contact the packaging material (3) from a first face (7) and a second contact surface (30) configured to contact the packaging material (3) from a second face (8);
**characterized in that** the collar (10) further comprises a sealing ring (24) comprising the inlet (14) and extending from the initial contact portion (21) to the inlet (14);
wherein the sealing ring (24) comprises a first inner surface (26) facing the flow channel (11) and an outer surface (27) opposite to the first inner surface (26);
wherein the base frame (9) comprises a second inner surface (38) facing the outer surface (27) of the sealing ring (24);
wherein the initial contact portion (21) is interposed between the first contact surface (29) and the pouring outlet (13) ;
wherein a thickness (d2) of an annular interface (16) interposed between the base frame (9) and the collar (10) is larger than a distance (d1) between the first contact surface (29) and the second contact surface (30);
wherein the collar (10) comprises an outer surface (43) opposite to the inner wall (22) of the collar (10) and having a curved portion (44);
wherein the base frame (9) comprises a first frame (35) having the first contact surface (29) and a second frame (36) having the second contact surface (30);
wherein the first frame (35) comprises an external surface(42) opposite to the first contact surface (29);
wherein the curved portion (44) contacts and/or intersects with external surface (42);
wherein the thickness (d2) of the annular interface (16) corresponds to a minimum distance between the second inner surface (38) and the curved portion (44).

2. Package according to claim 1, wherein the thickness (d2) is at least 1,2 times larger than the distance (d1) between the first contact surface (29) and the second contact surface (30).

3. Package according to claim 1 or 2, wherein the first contact surface (29) extends within a first plane (H1) and the second contact surface (30) extends within a second plane (H2), wherein the distance between the first contact surface (29) and the second contact surface (30) corresponds to the distance (d1) between the first plane (H1) and the second plane (H2).

4. Package according to any one of the preceding claims, wherein the second inner surface (38) intersects the outer surface (27) of the sealing ring (24) at a circumferential curve (46);
wherein the thickness (d2) of the annular interface (16) corresponds to a minimum distance between the curved portion (44) and the circumferential curve (46).

5. Package according to any one of the preceding claims,
wherein the first frame (35) comprises a plurality of radially protruding ridge elements (40).

6. Package according to any one of the preceding claims, wherein the second face (8) of the packaging material (3) is configured to contact the pourable product and/or to face an inner space of the package (1).

7. Package according to any one of the preceding claims, wherein the sealing ring (24) delimits an auxiliary space of the flow channel (11), wherein the auxiliary space has a frustoconical shape.

8. Package according to any one of the preceding claims, wherein the sealing ring (24) further comprises a curved tip surface (28) connecting the first inner surface (26) of the sealing ring (24) and the outer surface (27) of the sealing ring (24) with one another.

9. Package according to any one of the preceding claims, wherein the sealing ring (24) comprises an annular coupling section connecting the sealing ring (24) to the annular interface (16).

10. Package according to any one of the preceding claims, wherein the sealing ring (24) is designed to protrude towards and/or into an inner space of the package (1).

## Patentansprüche

1. Verpackung (1), die mit einem gießfähigen Produkt gefüllt und/oder füllbar ist, umfassend einen Hauptkörper (2), der eine festgelegte Gießöffnung aufweist und aus einem mehrlagigen Verbundverpackungsmaterial (3) ausgebildet ist, und eine Öffnungsvorrichtung (4, 4`);
wobei die Öffnungsvorrichtung (4, 4') an das Verpackungsmaterial (3) des Hauptkörpers (2) und um die festgelegte Gießöffnung gekoppelt ist;
wobei die Öffnungsvorrichtung (4, 4') an den Hauptkörper (2) geformt ist;
wobei die Öffnungsvorrichtung (4, 4') Folgendes umfasst:
- einen Grundrahmen (9), der dazu ausgelegt ist, die Öffnungsvorrichtung (4, 4') an das Verpackungsmaterial (3) und um die festgelegte Gießöffnung zu koppeln;
- eine Manschette (10), die mit dem Grundrahmen (9) integral verbunden ist und sich davon erstreckt, einen Strömungskanal (11) für das gießfähige Produkt begrenzt und einen Einlass (14) und einen Gießauslass (13) aufweist; und
- ein Verschlusselement (12), das innerhalb des Strömungskanals (11) angeordnet und/oder anordenbar ist und dazu ausgelegt ist, die festgelegte Gießöffnung abzudecken und/oder zu verschließen;
wobei das Verschlusselement (12) eine Kupplungsmembran (20) umfasst, die lösbar an einem Erstkontaktabschnitt (21) einer Innenwand (22) der Manschette (10) fixiert ist;
wobei die Manschette (10) einen den Gießauslass (13) umfassenden Hauptabschnitt (23) umfasst und sich vom Erstkontaktabschnitt (21) zum Gießauslass (13) erstreckt;
wobei der Grundrahmen (9) eine erste Kontaktfläche (29), die dazu ausgelegt ist, das Verpackungsmaterial (3) von einer ersten Seite (7) zu berühren, und eine zweite Kontaktfläche (30), die dazu ausgelegt ist, das Verpackungsmaterial (3) von einer zweiten Seite (8) zu berühren, umfasst;
**dadurch gekennzeichnet, dass** die Manschette (10) ferner einen den Einlass (14) umfassenden und sich vom Erstkontaktabschnitt (21) zum Einlass (14) erstreckenden Dichtungsring (24) umfasst;
wobei der Dichtungsring (24) eine dem Strömungskanal (11) zugewandte erste Innenfläche (26) und eine der ersten Innenfläche (26) entgegengesetzte Außenfläche (27) umfasst;
wobei der Grundrahmen (9) eine der Außenfläche (27) des Dichtungsrings (24) zugewandte zweite Innenfläche (38) umfasst;
wobei der Erstkontaktabschnitt (21) zwischen der ersten Kontaktfläche (29) und dem Gießauslass (13) angeordnet ist;
wobei die Stärke (d2) einer ringförmigen Schnittstelle (16) zwischen dem Grundrahmen (9) und der Manschette (10) größer ist als der Abstand (d1) zwischen der ersten Kontaktfläche (29) und der zweiten Kontaktfläche (30);
wobei die Manschette (10) eine Außenfläche (43) umfasst, die der Innenwand (22) der Manschette (10) entgegengesetzt ist und einen gekrümmten Abschnitt (44) aufweist;
wobei der Grundrahmen (9) einen ersten Rahmen (35) mit der ersten Kontaktfläche (29) und einen zweiten Rahmen (36) mit der zweiten Kontaktfläche (30) umfasst;
wobei der erste Rahmen (35) eine der ersten Kontaktfläche (29) entgegengesetzte äußere Fläche (42) umfasst;
wobei der gekrümmte Abschnitt (44) die äußere Fläche (42) berührt und/oder schneidet;
wobei die Stärke (d2) der ringförmigen Schnittstelle (16) einem Mindestabstand zwischen der zweiten Innenfläche (38) und dem gekrümmten Abschnitt (44) entspricht.

2. Verpackung nach Anspruch 1, wobei die Stärke (d2) mindestens das 1,2-Fache des Abstands (d1) zwischen der ersten Kontaktfläche (29) und der zweiten Kontaktfläche (30) beträgt.

3. Verpackung nach Anspruch 1 oder 2, wobei sich die erste Kontaktfläche (29) innerhalb einer ersten Ebene (H1) erstreckt und sich die zweite Kontaktfläche (30) innerhalb einer zweiten Ebene (H2) erstreckt, wobei der Abstand zwischen der ersten Kontaktfläche (29) und der zweiten Kontaktfläche (30) dem Abstand (d1) zwischen der ersten Ebene (H1) und der zweiten Ebene (H2) entspricht.

4. Verpackung nach einem der vorstehenden Ansprüche, wobei die zweite Innenfläche (38) die Außenfläche (27) des Dichtungsrings (24) in einer umlaufenden Kurve (46) schneidet;
wobei die Stärke (d2) der ringförmigen Schnittstelle (16) einem Mindestabstand zwischen dem gekrümmten Abschnitt (44) und der umlaufenden Kurve (46) entspricht.

5. Verpackung nach einem der vorstehenden Ansprüche, wobei der erste Rahmen (35) mehrere radial vorstehende Rippenelemente (40) umfasst.

6. Verpackung nach einem der vorstehenden Ansprüche, wobei die zweite Seite (8) des Verpackungsmaterials (3) dazu ausgelegt ist, das gießfähige Produkt zu berühren und/oder dem Innenraum der Verpackung (1) zugewandt zu sein.

7. Verpackung nach einem der vorstehenden Ansprüche, wobei der Dichtungsring (24) einen Nebenraum des Strömungskanals (11) begrenzt, wobei der Nebenraum kegelstumpfförmig ist.

8. Verpackung nach einem der vorstehenden Ansprüche, wobei der Dichtungsring (24) ferner eine gekrümmte Spitzenfläche (28) umfasst, welche die erste Innenfläche (26) des Dichtungsrings (24) mit der Außenfläche (27) des Dichtungsrings (24) verbindet.

9. Verpackung nach einem der vorstehenden Ansprüche, wobei der Dichtungsring (24) einen ringförmigen Kupplungsabschnitt umfasst, welcher den Dichtungsring (24) mit der ringförmigen Fläche (16) verbindet.

10. Verpackung nach einem der vorstehenden Ansprüche, wobei der Dichtungsring (24) dazu ausgestaltet ist, zu einem und/oder in einen Innenraum der Verpackung (1) vorzustehen.

## Revendications

1. Emballage (1) rempli et/ou pouvant être rempli d'un produit versable comprenant un corps principal (2) ayant une ouverture de versement dédiée et étant formé à partir d'un matériau d'emballage composite multicouche (3), et un dispositif d'ouverture (4, 4') ; le dispositif d'ouverture (4, 4') étant couplé sur le matériau d'emballage (3) du corps principal (2) et autour de l'ouverture de versement dédiée ;
le dispositif d'ouverture (4, 4') étant moulé sur le corps principal (2) ;
le dispositif d'ouverture (4, 4') comprenant :
- un cadre de base (9) configuré pour coupler le dispositif d'ouverture (4, 4') sur le matériau d'emballage (3) et autour de l'ouverture de versement dédiée ;
- un collier (10) raccordé d'un seul tenant au, et s'étendant à partir du, cadre de base (9), délimitant un canal d'écoulement (11) pour le produit versable, et ayant une entrée (14) et une sortie de versement (13) ; et
- un élément de fermeture (12) agencé et/ou pouvant être agencé à l'intérieur du canal d'écoulement (11) et étant configuré pour recouvrir et/ou fermer l'ouverture de versement dédiée ;
l'élément de fermeture (12) comprenant une membrane de couplage (20) qui est fixée de façon amovible à une portion de contact initiale (21) d'une paroi interne (22) du collier (10) ;
le collier (10) comprenant une portion principale (23) comprenant la sortie de versement (13) et s'étendant de la portion de contact initiale (21) à la sortie de versement (13) ;
le cadre de base (9) comprenant une première surface de contact (29) configurée pour entrer en contact avec le matériau d'emballage (3) à partir d'une première face (7) et une deuxième surface de contact (30) configurée pour entrer en contact avec le matériau d'emballage (3) à partir d'une seconde face (8) ;
**caractérisé en ce que** le collier (10) comprend en outre une bague d'étanchéité (24) comprenant l'entrée (14) et s'étendant de la portion de contact initiale (21) à l'entrée (14) ;
la bague d'étanchéité (24) comprenant une première surface interne (26) faisant face au canal d'écoulement (11) et une surface externe (27) opposée à la première surface interne (26) ;
le cadre de base (9) comprenant une deuxième surface interne (38) faisant face à la surface externe (27) de la bague d'étanchéité (24) ;
la portion de contact initiale (21) étant interposée entre la première surface de contact (29) et la sortie de versement (13) ;
dans lequel une épaisseur (d2) d'une interface annulaire (16) interposée entre le cadre de base (9) et le collier (10) est supérieure à une distance (d1) entre la première surface de contact (29) et la deuxième surface de contact (30) ;
le collier (10) comprenant une surface externe (43) opposée à la paroi interne (22) du collier (10) et ayant une portion incurvée (44) ;
le cadre de base (9) comprenant un premier cadre (35) ayant la première surface de contact (29) et un deuxième cadre (36) ayant la deuxième surface de contact (30) ;
le premier cadre (35) comprenant une surface externe (42) opposée à la première surface de contact (29) ;
la portion incurvée (44) entrant en contact et/ou croisant la surface externe (42) ;
l'épaisseur (d2) de l'interface annulaire (16) correspondant à une distance minimale entre la deuxième surface interne (38) et la portion incurvée (44).

2. Emballage selon la revendication 1, dans lequel l'épaisseur (d2) est au moins 1,2 fois supérieure à la distance (d1) entre la première surface de contact (29) et la deuxième surface de contact (30).

3. Emballage selon la revendication 1 ou la revendication 2, dans lequel la première surface de contact (29) s'étend à l'intérieur d'un premier plan (H1) et la deuxième surface de contact (30) s'étend à l'intérieur d'un deuxième plan (H2), la distance entre la première surface de contact (29) et la deuxième surface de contact (30) correspondant à la distance (d1) entre le premier plan (H1) et le deuxième plan (H2) .

4. Emballage selon l'une quelconque des revendications précédentes, dans lequel la deuxième surface interne (38) croise la surface externe (27) de la bague d'étanchéité (24) au niveau d'une courbe circonférentielle (46) ;
l'épaisseur (d2) de l'interface annulaire (16) correspondant à une distance minimale entre la deuxième surface interne (38) et la courbe circonférentielle (46) .

5. Emballage selon l'une quelconque des revendications précédentes,
dans lequel le premier cadre (35) comprend une pluralité d'éléments de crête faisant saillie radialement (40).

6. Emballage selon l'une quelconque des revendications précédentes, dans lequel la deuxième face (8) du matériau d'emballage (3) est configurée pour entrer en contact avec le produit versable et/ou pour faire face à un espace interne de l'emballage (1).

7. Emballage selon l'une quelconque des revendications précédentes, dans lequel la bague d'étanchéité (24) délimite un espace auxiliaire du canal d'écoulement (11), l'espace auxiliaire ayant une forme tronconique.

8. Emballage selon l'une quelconque des revendications précédentes, dans lequel la bague d'étanchéité (24) comprend en outre une surface de pointe incurvée (28) raccordant la première surface interne (26) de la bague d'étanchéité (24) et la surface externe (27) de la bague d'étanchéité (24) l'une à l'autre.

9. Emballage selon l'une quelconque des revendications précédentes, dans lequel la bague d'étanchéité (24) comprend une section de couplage annulaire raccordant la bague d'étanchéité (24) à l'interface annulaire (16).

10. Emballage selon l'une quelconque des revendications précédentes, dans lequel la bague d'étanchéité (24) est conçue pour faire saillie vers et/ou jusque dans un espace interne de l'emballage (1).
